# FASCICULE DE BREVET EUROPEEN

(11) **EP 1 586 871 B1**
(45) Date de publication et mention de la délivrance du brevet: **30.05.2007**
(21) Numéro de dépôt: 05300240.8
(22) Date de dépôt: 01.04.2005
(51) Int. Cl.: G01F 1/704, G01F 1/708

(54) **Procédé et dispositif de mesure de débit d'un fluide**
Verfahren und Vorrichtung zur Messung einer Flüssigkeitsströmung
Method and device for measuring a flow of a fluid

(30) Priorité: 08.04.2004 FR 0450711
(43) Date de publication de la demande: 19.10.2005
(73) Titulaire: Altis Semiconductor, 91105 Corbeil Essonnes Cedex (FR)
(72) Inventeur: ZIMMERMANN, Markus, 91105, CORBEIL ESSONNES (FR)
(74) Mandataire: Lenne, Laurence

(56) Documents cités:
- EP-A- 0 289 361
- US-A- 4 237 730
- US-B1- 6 595 049
- SCHNELL G: "MEASUREMENT OF FLOW IN INFUSION SYSTEMS" MEDICAL AND BIOLOGICAL ENGINEERING AND COMPUTING, PETER PEREGRINUS LTD. STEVENAGE, GB, vol. 35, no. 6, novembre 1997 (1997-11), pages 737-741, XP000723491 ISSN: 0140-0118

## Description

La présente invention a pour objet un procédé de mesure du débit d'un fluide s'écoulant dans une canalisation, ainsi qu'un débitmètre permettant d'effectuer une telle mesure. Le fluide est notamment un liquide.

Il existe plusieurs types de débitmètres mais la plupart sont chers, notamment si l'on souhaite mesurer de faibles débits et dans une plage de débits relativement étendue. On peut citer par exemple les débitmètres à orifices calibrés, le fluide s'écoulant à travers un orifice et l'on mesure la différence de pression entre l'amont et l'aval de l'orifice. Cependant, lorsque le fluide est chargé en particules solides, l'orifice peut se boucher ou être endommagé modifiant ainsi sa dimension ce qui fausse la mesure. On connaît également les débitmètres fonctionnant selon les forces de Coriolis : le fluide circule dans un tube en forme de "U" lequel est mis en oscillation. La variation de la fréquence d'oscillation caractérise la masse du fluide qui traverse le tube et donc le débit du fluide. Il existe également des débitmètres à ultrasons fonctionnant par effet Doppler. Ce type d'appareils est cependant mal adapté à la mesure des faibles débits.

Tous ces débitmètres présentent l'inconvénient d'être chers, coûtant chacun entre 15.000 et 20.000 €.

Une autre technologie pour mesurer le débit d'un fluide consiste à "marquer" localement le fluide par une variation soudaine de température, à l'aide d'une source thermique telle qu'une résistance chauffante par exemple, et à mesurer le temps qui s'écoule pour que ce fluide marqué thermiquement parcoure une certaine distance. Cette distance peut être, soit la distance séparant la source thermique d'un détecteur placé en aval de cette source thermique, soit la distance séparant deux détecteurs situés en aval de la source thermique. Cette technique est par exemple décrite dans la demande de brevet européen n° 0 289 361.

Cette distance peut également être la distance entre deux détecteurs placés respectivement en amont et en aval de cette source thermique, cette technique étant décrite dans le brevet US 595 049.

La demande de brevet européen n°0 289 361 décrit plus particulièrement un élément chauffant entourant un tube dans lequel circule un liquide dont on veut mesurer le débit. L'élément chauffant est alimenté périodiquement pour de courtes périodes de façon à ne chauffer, chaque fois qu'il est alimenté, qu'une petite quantité de liquide. La température du fluide s'élève, marquant ainsi thermiquement la petite quantité du liquide. Deux détecteurs à rayonnement infrarouge, situés en aval de l'élément chauffant et espacés d'une distance connue, détectent le passage du liquide chauffé. Une horloge reliée à ces détecteurs mesure le temps mis par le liquide chauffé pour parcourir la distance séparant les deux détecteurs. On peut donc calculer la vitesse d'écoulement du liquide et ensuite déterminer le débit. On remarque que la méthode décrite dans cette demande de brevet fait appel à deux détecteurs.

Concernant le marquage thermique tel qu'il est décrit dans l'art antérieur, il est nécessaire tout d'abord de disposer d'une source thermique capable d'élever très rapidement et localement une petite portion de fluide afin que le gradient de température puisse être facilement détecté. A titre d'exemple, élever la température d'un centimètre cube d'eau d'un degré Celsius nécessite 4,2 Watts. Si l'on souhaite élever la température de 50 à 500 cc d'eau de un à trois degrés C, il est nécessaire de disposer d'une puissance de 3,5 à 105 Watt/s en mode pulsé. Ceci est réalisable par laser infrarouge ou par micro-ondes, mais avec un coût élevé. De plus la puissance d'un générateur micro-ondes est difficilement contrôlable.

Il est également nécessaire pour un marquage thermique efficace d'avoir une bonne stabilité de la frontière séparant les zones à températures différentes. Les turbulences du fluide doivent donc être évitées et, dans ce but, la distance séparant les deux détecteurs ou la distance séparant la source thermique du détecteur doit être courte.

L'objet de la présente invention est un procédé de mesure du débit et un débitmètre qui ne présentent pas les inconvénients de l'art antérieur. Le débitmètre est notamment très peu cher comparé aux appareils existants, tout en permettant des mesures dans une large plage de débits, incluant des débits relativement faibles. La plage de débits est typiquement de 0 à 500 cc/min. Un seul détecteur est utilisé, ce qui permet d'abaisser le coût du débitmètre et de minimiser l'effet néfaste des turbulences en le plaçant à un endroit judicieusement choisi (ce qui est plus compliqué lorsque deux détecteurs sont utilisés).

De façon plus précise, l'invention concerne un procédé de mesure du débit d'un fluide s'écoulant dans une canalisation où :
- le fluide est séparé en deux parties, s'écoulant alors dans deux branches, puis lesdites deux parties sont recombinées dans une tubulure de sortie,
- une différence est créée entre la température du fluide dans l'une des deux branches et la température du fluide dans l'autre branche, caractérisé en ce que :
   - la section de passage du fluide dans chacune desdites deux branches est modulée tout en maintenant constante la section de passage totale du fluide dans lesdites deux branches de sorte que la température du fluide dans ladite tubulure de sortie varie de façon modulée,
   - les variations de température dudit fluide dans ladite tubulure de sortie sont détectées en fonction du temps, et
   - le débit dudit fluide dans ladite canalisation est déterminée à partir de ladite détection de température en fonction du temps.

L'invention concerne également un dispositif de mesure du débit d'un fluide dans une canalisation ayant :
- une tubulure d'admission et une tubulure de sortie du fluide et, connectées entre lesdites tubulures, deux branches de canalisation, lesdites tubulures étant aptes à être connectées sur ladite canalisation,
- des moyens pour créer une différence entre la température du fluide s'écoulant dans l'une desdites branches et la température du fluide s'écoulant dans l'autre branche,
caractérisé en ce qu'il comporte :
- des moyens pour faire varier de façon alternée la section de passage de chacune desdites branches, tout en maintenant constante la section de passage totale du fluide dans lesdites branches, et
- des moyens pour détecter, en fonction du temps, les variations de température du fluide dans ladite tubulure de sortie.

La différence de température consiste à faire varier la température du fluide dans l'une desdites branches. On peut par exemple augmenter la température à l'aide d'une simple résistance chauffante.

Selon un mode de réalisation préféré, on élève simultanément la température du fluide dans l'une des deux branches et l'on diminue la température du fluide dans l'autre branche, de préférence à l'aide d'un élément à effet Peltier.

Avantageusement, les variations de température dans les deux branches sont sensiblement égales, mais de sens opposé, de sorte que le bilan thermique soit neutre, ce qui correspond à conserver sensiblement la même température du fluide avant la séparation en deux parties et après la recombinaison (température moyenne) dans la tubulure de sortie.

Selon un mode de réalisation avantageux, la détection des variations de température du fluide tient également compte de la vitesse de passage du fluide dans ladite tubulure de sortie. Pour cela, un détecteur de mouvement à rayonnement infrarouge est utilisé.

Selon un autre mode de réalisation, chacune des deux branches de canalisation comporte une partie souple déformable dont la section de passage peut être modulée par compression. Un élément oscillant est placé en regard des parties souples et apte, en se déplaçant, à comprimer alternativement les parties souples tout en maintenant constante la section de passage totale du fluide dans les branches de canalisation. Le déplacement de l'élément oscillant peut être effectué à l'aide d'un électroaimant.

L'élément oscillant peut être situé, soit entre les parties souples, soit en les encadrant. Dans ce dernier cas, l'élément oscillant peut prendre la forme d'une fourche à deux dents, les parois internes des dents venant comprimer alternativement les parois souples.

D'autres avantages et caractéristiques de l'invention apparaîtront au cours de la description qui suit de plusieurs modes de réalisation, donnés à titre d'exemples non limitatifs, en référence aux dessins annexés et sur lesquels :
- les figures 1A et 1B représentent schématiquement un mode de réalisation de l'invention;
- les figures 2A, 2B et 2C illustrent le fonctionnement du mode de réalisation des figures 1;
- la figure 3 montre schématiquement un autre mode de réalisation; et
- la figure 4 montre la forme du signal délivré par le détecteur de mouvement à rayonnement infrarouge.

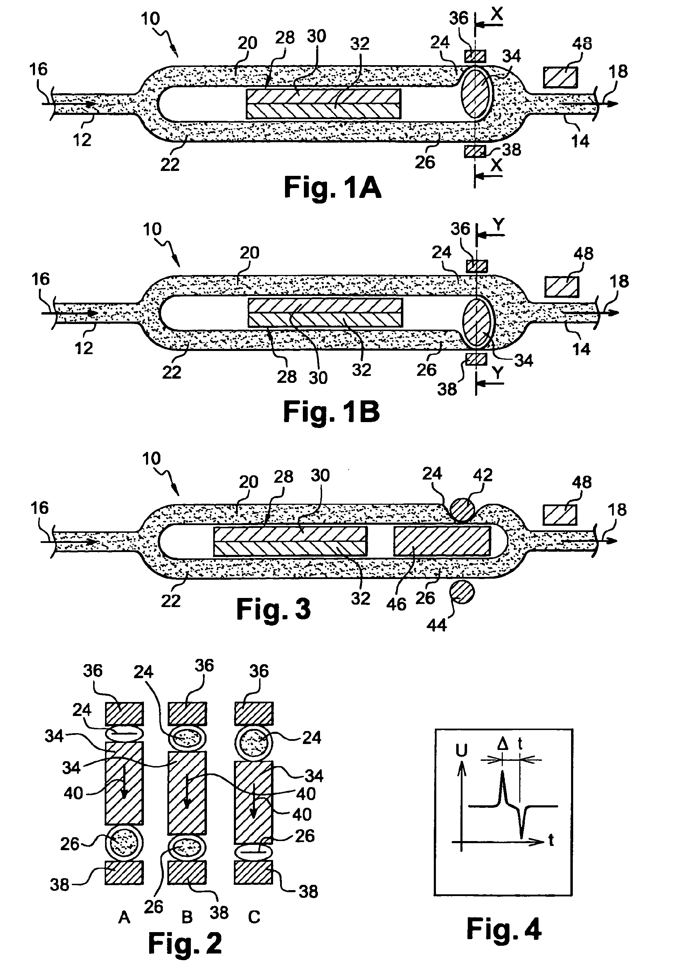

Sur les figures 1A et 1B, le débitmètre 10 est composé d'une tubulure d'entrée 12 et d'une tubulure de sortie 14. Ces tubulures sont adaptées à être connectées à une canalisation (non représentée) dans laquelle circule le fluide dont on veut mesurer le débit. Les flèches 16 et 18 représentent le sens de circulation du fluide. Entre ces tubulures d'entrée et de sortie, sont reliées en parallèle deux branches de canalisation 20 et 22. Chacune d'elles comporte au moins une partie souple 24 ou 26 qui peut être déformée par compression et retrouver sa forme initiale lorsque la compression est supprimée. Alternativement, les branches de canalisation 20 et 22 sont entièrement souples. Les parties souples, ou les branches de canalisation en entier, peuvent être réalisées en un matériau plastique tel que le néoprène. Les matériaux utilisés habituellement pour les tuyaux souples des pompes péristaltiques conviennent.

Selon l'invention, on établit une différence de température du fluide présent dans les deux branches 20 et 22. On pourrait par exemple enrouler une résistance chauffante sur une partie de la branche 20 ou 22. Il est cependant plus avantageux d'agir simultanément sur les deux branches. Ainsi, sur les figures 1, un élément à effet Peltier 28, composé en fonctionnement d'une partie chaude 30 et d'une partie froide 32, est placé en regard des branches de canalisation 20 et 22. La partie chaude 30 de l'élément à effet Peltier chauffe donc le fluide passant par la branche 20 et, en même temps, la partie froide 32 refroidit le fluide passant dans la branche 22. Les variations de température du fluide entre la partie chaude et la partie froide sont de préférence-égales mais de sens opposé. De la sorte, le bilan thermique pour le fluide est neutre. L'élément à effet Peltier peut être choisi par exemple parmi les nombreux modèles commercialisés par la société allemande Quick-Ohm Küpper & Co. en fonction des caractéristiques du débitmètre, du fluide et de la différence de température souhaitée entre les deux branches 20 et 22. Le chauffage et le refroidissement du fluide s'effectue donc en continue et non pas de manière pulsée. La différence de température du fluide entre les deux branches 20 et 22 peut être relativement faible, de l'ordre de un degré Celsius ou plus.

Les parties souples 24 et 26 des branches 20 et 22 sont alternativement comprimées de façon à diminuer ou même fermer complètement la section de passage du fluide dans les branches de canalisation, tout en conservant le même débit de fluide dans la tubulure de sortie 14 que dans la tubulure d'entrée 12. En d'autres termes, la section de passage totale du fluide dans les branches de canalisation est maintenue sensiblement constante. Avantageusement, cette section de passage totale est sensiblement égale à la section de passage des tubulures 12 et 14. Cette compression alternée est réalisée à l'aide d'un élément oscillant 32 placé en regard des parties souples 24 et 26 et apte, en se déplaçant, à comprimer alternativement les parties souples tout en maintenant constante la section de passage totale du fluide dans les branches. Des butées 36 et 38 permettent de pincer les parties souples 24 et 26 entre l'élément oscillant 34 et ces butées.

Les figures 2A et 2C montrent schématiquement en coupes selon XX et selon YY le mode de réalisation représenté respectivement sur les figures 1A et 1 B. Sur la figure 2A, la partie souple 24 est complètement fermée de sorte qu'aucun fluide ne circule dans la branche 20. Par contre, la partie souple 26 n'est pas comprimée et donc le fluide circule librement dans la branche 22. L'élément oscillant 34 se déplace alors dans le sens de la flèche 40, ce qui décomprime progressivement la partie souple 24 et comprime progressivement la partie souple 26. La figure 2B montre une position intermédiaire de l'élément oscillant 34 pour laquelle les deux parties 24 et 26 sont partiellement comprimées. En continuant à se déplacer dans le sens de la flèche 40, l'élément oscillant atteint une position extrême (figure 2C) pour laquelle la partie 24 n'est plus comprimée et la partie 26 est complètement comprimée. L'élément oscillant, qui effectue un mouvement de va-et-vient, est ensuite déplacé dans le sens inverse de la flèche 40 afin de décomprimer la partie 26 et de comprimer la partie 24, et ainsi de suite. Pendant le déplacement de l'élément oscillant 34, la section de passage totale constituée par la somme des sections de passage des parties 24 et 26 est sensiblement conservée. Il n'y a donc pratiquement pas de variation de débit du fluide.

L'élément oscillant 34 peut être une masselotte mise en mouvement par un électroaimant ou constitué par l'armature mobile d'un électroaimant. Le mouvement de va-et-vient de l'élément oscillant peut aussi être obtenu à l'aide d'un moteur rotatif et de moyens classiques de transformation d'un mouvement de rotation en un mouvement de va-et-vient.

La figure 3 représente un autre mode de réalisation de l'invention qui diffère du mode de réalisation des figures 1 par les moyens pour faire varier de façon alternée la section de passage de chacune desdites branches. Les éléments communs entre les figures 1 et 3 portent les mêmes numéros de référence. L'élément oscillant est principalement constitué de deux dents 42 et 44 d'une fourche (tels que les deux tiges d'un diapason en forme de "U") qui sont en contact, par leurs parois intérieures, avec les parties souples 24 et 26. Les dents 24 et 26 se déplacent solidairement en effectuant un mouvement de va-et-vient identique à celui de la masselotte 34. Les butées 36 et 38 des figures 1 sont remplacées par une paroi rigide 46 formant butée pour les dents 42 et 44. En se déplaçant, ces dents 42 et 44 compriment alternativement les parois souples 24 et 26 contre la paroi 46, de la même façon que l'élément oscillant des figures 1. L'intérêt de ce mode de réalisation réside dans la distance entre les deux branches 20 et 22 qui peut être réduite, diminuant ainsi les perturbations du fluide au cours de son déplacement. A cet égard, il peut être avantageux de placer l'élément à effet Peltier 28, non plus entre les branches 20 et 22, mais à lextérieur tout en gardant la partie chaude 30 à proximité immédiate (ou en contact) de la branche 20 et la partie froide 32 à proximité immédiate (ou en contact) de la branche 22.

La température du fluide dans la tubulure de sortie 14 est détectée par but moyen approprié, de façon générale un détecteur de variation de température. Cependant, ce détecteur est avantageusement remplacé par un détecteur de mouvement à rayonnement infrarouge 48. Ce détecteur est un capteur différentiel qui enregistre les variations de température du fluide en mouvement. Il est composé de deux petits capteurs, placés cote à cote dans un même boîtier, qui enregistrent le mouvement d'une source infrarouge. Ce type de détecteur est généralement utilisé pour détecter la présence dune personne ou d'un animal qui se déplace dans un local surveillé. Le détecteur délivre un signal différentiel qui dépend de la variation de température du fluide et de la vitesse de passage du fluide devant le détecteur (donc du débit). Le détecteur peut être par exemple le détecteur du type RE200B commercialisé par la société américaine Glolal Corporation de Wappingers Falls, NY 12590.

La figure 4 représente la forme du signal, l'amplitude U du signal en fonction du temps t. L'amplitude U dépend de la variation de température et du débit. Plus la variation de température est rapide, plus l'amplitude est grande. La distance (delta t) entre les deux pics est représentative du débit du fluide. Le débitmètre comprend donc un circuit électronique (non représenté) avec une horloge pour le traitement des signaux. Pour obtenir la valeur du débit, il suffit de calibrer au préalable le débitmètre à l'aide de volumes de fluide connus et de mesurer les temps de passage à travers l'appareil. Cette opération de calibration est bien connue de l'homme du métier.

En fonctionnement, le fluide pénètre par la tubulure d'entrée 16, préalablement connectée à une canalisation dans laquelle le fluide s'écoule. Puis le fluide est séparé en deux parties, passant par les branches 20 et 22. Il est chauffé dans la branche 20 et refroidit dans la branche 22. L'élément oscillant 34, ou les dents 42 et 44, module(nt) de façon alternée le débit du fluide dans les branches 20 et 22, tout en gardant le débit total constant. Il en résulte une variation de la température du fluide passant devant le détecteur 48. Le fluide est donc "marqué" thermiquement et le passage de cette marque est capté par le détecteur 48.

De façon générale, une différence de température d'au moins un degré C entre les températures du fluide dans les branches 20 et 22 est nécessaire pour assurer un niveau de signal correct du détecteur 48. Pour des débits allant jusqu'à 500 cc/min, la période du mouvement de va-et-vient de l'élément oscillant 34 ou 42/44 est comprise entre 5 et 10 secondes. Cependant cette période dépend des caractéristiques de l'élément à effet Peltier et de la variation de température souhaitée. L'expérimentation permet de déterminer la valeur appropriée en fonction des caractéristiques du fluide (caractéristiques thermiques notamment) et de la plage de débit considérée.

Le débitmètre de l'invention est particulièrement adapté à la mesure des débits des liquides, notamment des liquides abrasifs ou chimiquement agressifs. En effet, la mesure est non intrusive, le fluide ne rencontrant aucun obstacle sur son passage et il n'y a pas de risque de pollution. Le débitmètre peut être réalisé à faible coût avec des composants disponibles commercialement. De plus un seul détecteur à rayonnement infrarouge est utilisé. En plus d'une diminution du coût de l'appareil, le problème des erreurs de mesure dues aux turbulences du fluide se résout plus facilement puisqu'il est nécessaire de trouver un seul endroit (au lieu de deux lorsque deux détecteurs sont utilisés) où les turbulences n'existent pas ou sont sans effet réel sur les résultats de la mesure de débit.

## Revendications

1. Procédé de mesure du débit d'un fluide s'écoulant dans une canalisation où:
- le fluide est séparé en deux parties, s'écoulant alors dans deux branches (20, 22), puis lesdites deux parties sont recombinées dans une tubulure de sortie (14),
- une différence est créée entre la température du fluide dans l'une des deux branches (20, 22) et la température du fluide dans l'autre branche,
**caractérisé en ce que** :
- la section de passage du fluide dans chacune desdites deux branches est modulée tout en maintenant constante la section de passage totale du fluide dans lesdites deux branches de sorte que la température du fluide dans ladite tubulure de sortie (14) varie de façon modulée,
- les variations de température dudit fluide dans ladite tubulure de sortie (14) sont détectées en fonction du temps, et
- le débit dudit fluide dans ladite canalisation est déterminée à partir de ladite détection de température en fonction du temps.

2. Procédé selon la revendication 1 **caractérisé en ce que** la différence de température consiste à faire varier la température du fluide dans l'une desdites branches (20, 22).

3. Procédé selon la revendication 2 **caractérisé en ce que** simultanément l'on élève la température du fluide dans l'une des deux branches (20, 22) et l'on diminue la température du fluide dans l'autre branche.

4. Procédé selon la revendication 3 **caractérisé en ce que** les variations de température dans les deux branches (20, 22) sont sensiblement égales, mais de sens opposé, de sorte que le bilan thermique soit neutre, ce qui correspond à conserver sensiblement la même température du fluide avant ladite séparation en deux parties et après la recombinaison dans ladite tubulure de sortie (14).

5. Procédé selon l'une des revendications précédentes **caractérisé en ce que** la période de modulation de ladite section de passage du fluide correspond sensiblement au temps nécessaire pour élever la température du fluide d'au moins un degré Celsius.

6. Procédé selon l'une des revendications précédentes **caractérisé en ce que** la détection des variations de température du fluide tient également compte de la vitesse de passage du fluide dans ladite tubulure de sortie (14).

7. Dispositif de mesure du débit d'un fluide dans une canalisation ayant :
- une tubulure d'admission (12) et une tubulure de sortie (14) du fluide et, connectées entre lesdites tubulures, deux branches de canalisation (20, 22), lesdites tubulures étant aptes à être connectées sur ladite canalisation,
- des moyens pour créer une différence entre la température du fluide s'écoulant dans l'une desdites branches (20, 22) et la température du fluide s'écoulant dans l'autre branche,
**caractérisé en ce que** il comporte :
- des moyens pour faire varier de façon alternée la section de passage de chacune desdites branches, tout en maintenant constante la section de passage totale du fluide dans lesdites branches (20, 22), et
- des moyens pour détecter, en fonction du temps, les variations de température du fluide dans ladite tubulure de sortie.

8. Dispositif selon la revendication 7 **caractérisé en ce que** lesdits moyens pour créer une différence de température comportent au moins un élément chauffant entourant l'une desdites deux branches (20, 22).

9. Dispositif selon la revendication 7 **caractérisé en ce que** lesdits moyens pour créer une différence de température comportent un élément à effet Peltier (28), une partie (30) dudit élément élevant la température du fluide de l'une (20) desdites branches et une autre partie (32) dudit élément abaissant la température du fluide dans l'autre branche (22).

10. Dispositif selon la revendication 9 **caractérisé en ce que** l'élévation de température correspond sensiblement, en sens opposé, à la diminution de température de sorte que le bilan thermique soit neutre.

11. Dispositif selon l'une des revendications 7 à 10 **caractérisé en ce que** chacune desdites deux branches de canalisation (20, 22) comporte une partie souple déformable (24, 26) dont la section de passage peut être modulée par compression.

12. Dispositif selon la revendication 11 **caractérisé en ce que** lesdits moyens pour faire varier de façon alternée la section de passage de chacune desdites branches comportent un élément oscillant (34, 42-44) placé en regard desdites parties souples desdites branches et apte, en se déplaçant, à comprimer alternativement lesdites parties souples (24, 26) tout en maintenant constante la section de passage totale du fluide dans lesdites branches.

13. Dispositif selon la revendication 12 **caractérisé en ce que** lesdits moyens comportent en outre un électroaimant déplaçant ledit élément oscillant.

14. Dispositif selon la revendication 12 ou 13 **caractérisé en ce que** ledit élément oscillant est une masselotte (34) placée entre lesdites parties souples (24, 26).

15. Dispositif selon la revendication 12 ou 13 **caractérisé en ce que** ledit élément oscillant comporte une partie en forme de fourche à deux dents (42, 44) encadrant lesdites parties souples (24, 26), la paroi intérieure de chaque dent provoquant par compression la modulation de section de la partie souple.

16. Dispositif selon l'une des revendications 7 à 15 **caractérisé en ce que** lesdits moyens pour détecter les variations de température du fluide comportent un détecteur à rayonnement infrarouge (48).

17. Dispositif selon la revendication 16 **caractérisé en ce que** ledit détecteur est un détecteur de mouvement à rayonnement infrarouge (48).

18. Procédé selon l'une des revendications 1 à 6 **caractérisé en ce que** ledit fluide est un liquide.

## Claims

1. A method of measuring the flow rate of a fluid flowing in a pipe, in which:
- the fluid is separated into two portions, so as to flow in two branches (20, 22), and then said two portions are recombined in an outlet tube (14); and
- a difference is created between the temperature of the fluid in one of the two branches (20, 22) and the temperature of the fluid in the other branch; the method being **characterized in that**:
- the flow section of the fluid in each of said two branches is modulated while keeping the total flow section of the fluid in said two branches constant, so that the temperature of the fluid in said outlet tube (14) varies in modulated manner;
- the temperature variations of said fluid in said outlet tube (14) are detected as a function of time; and ,
- the flow rate of said fluid in said pipe is determined from said detection of temperature as a function of time.

2. A method according to claim 1, **characterized in that** the temperature difference consists in causing the temperature of the fluid to vary in one of said branches (20, 22).

3. A method according to claim 2, **characterized in that** the temperature of the fluid in one of the two branches (20, 22) is raised while simultaneously reducing the temperature of the fluid in the other branch.

4. A method according to claim 3, **characterized in that** the temperature variations in the two branches (20, 22) are substantially equal but in opposite directions, such that the thermal balance is neutral, corresponding to conserving substantially the same temperature for the fluid prior to being separated into two portions and after being recombined in said outlet tube (14).

5. A method according to any preceding claim, **characterized in that** the period of the modulation of said flow section for the fluid corresponds substantially to the time required to raise the temperature of the fluid by at least one degree Celsius.

6. A method according to any preceding claim, **characterized in that** the temperature variations in the fluid are detected while also taking account of the flow speed of the fluid in said outlet tube (14).

7. A device for measuring the flow rate of a fluid in a pipe, the device having:
- an admission tube (12) and an outlet tube (14) for the fluid, and two pipe branches (20, 22) connected between said tubes, said tubes being suitable for being connected to said pipe; and
- means for creating a difference between the temperature of the fluid flowing in one of said branches (20, 22) and the temperature of the fluid flowing in the other branch; the device being **characterized in that** it comprises:
- means for causing the flow section of each of said branches to vary in alternating manner while maintaining the total flow section for the fluid in said branches (20, 22) constant; and
- means for detecting, as a function of time, the variations in the temperature of the fluid in said outlet tube.

8. A device according to claim 7, **characterized in that** said means for creating a temperature difference comprise at least one heater element surrounding one of said two branches (20, 22).

9. A device according to claim 7, **characterized in that** said means for creating a temperature difference comprise a Peltier effect element (28), one portion (30) of said element raising the temperature of the fluid in one of said branches (20) and another portion (32) of said element lowering the temperature of the fluid in the other branch (22).

10. A device according to claim 9, **characterized in that** the temperature rise corresponds substantially, in the opposite direction, to the temperature reduction such that the thermal balance is neutral.

11. A device according to any one of claims 7 to 10, **characterized in that** each of said two pipe branches (20, 22) includes a deformable flexible portion (24, 26) of flow section that can be modulated by compression.

12. A device according to claim 11, **characterized in that** said means for causing the flow section of each said branches to vary in alternating manner comprise an alternating element (34, 42-44) placed facing said flexible portions of said branches and suitable, on moving, for compressing said flexible portions (24, 26) in alternation while maintaining the total flow section for the fluid in said branches constant.

13. A device according to claim 12, **characterized in that** said means further comprise an electromagnet moving said oscillating element.

14. A device according to claim 12 or claim 13, **characterized in that** said oscillating element is a flyweight (34) placed between said flexible portions (24, 26).

15. A device according to claim 12 or claim 13, **characterized in that** said oscillating element includes a portion in the form of a two-pronged fork (42, 44) on either side of said flexible portions (24, 26), the inside wall of each prong causing the section of the flexible portion to be modulated by compression.

16. A device according to any one of claims 7 to 15, **characterized in that** said means for detecting temperature variations in the fluid comprise an infrared radiation detector (48).

17. A device according to claim 16, **characterized in that** said detector is an infrared radiation motion detector (48).

18. A method according to any one of claims 1 to 6, **characterized in that** said fluid is a liquid.

## Patentansprüche

1. Verfahren zur Messung des Durchsatzes von einem Fluid, das in einer Rohrleitung fließt, in der:
- das Fluid in zwei Teile getrennt wird, die somit in zwei Zweigen (20, 22) fließen, woraufhin die besagten zwei Teile in einem Abflussrohr (14) wiedervereinigt werden,
- eine Differenz zwischen der Temperatur des Fluids in einem der beiden Zweige (20, 22) und der Temperatur des Fluids in dem anderen Zweig erzeugt wird,
**dadurch gekennzeichnet, dass**:
- der Durchflussquerschnitt des Fluids in jedem der besagten zwei Zweige moduliert ist, wobei gleichzeitig der gesamte Durchflussquerschnitt des Fluids in den besagten zwei Zweigen derart konstant gehalten wird, dass die Temperatur des Fluids im besagten Abflussrohr (14) auf modulierte Art und Weise variiert,
- die Variationen der Temperatur des besagten Fluids im besagten Abflussrohr (14) in Abhängigkeit von der Zeit erkannt werden, und
- der Durchsatz des besagten Fluids in der besagten Rohrleitung anhand der besagten Erkennung der Temperatur in Abhängigkeit von der Zeit bestimmt wird.

2. Verfahren nach Anspruch 1, **dadurch gekennzeichnet, dass** die Differenz der Temperatur darin besteht, die Temperatur des Fluids in einem der besagten Zweige (20, 22) variieren zu lassen.

3. Verfahren nach Anspruch 2, **dadurch gekennzeichnet, dass** man gleichzeitig die Temperatur des Fluids in dem einen der beiden Zweige (20, 22) erhöht und die Temperatur des Fluids in dem anderen Zweig verringert.

4. Verfahren nach Anspruch 3, **dadurch gekennzeichnet, dass** die Variationen der Temperatur in den beiden Zweigen (20, 22) derart im Wesentlichen gleich sind, jedoch in entgegengesetzter Richtung, dass die Wärmebilanz neutral ist, was sich darauf beläuft, im Wesentlichen dieselbe Temperatur des Fluids vor der besagten Trennung in zwei Teile und nach der Wiedervereinigung im besagten Abflussrohr (14) zu bewahren.

5. Verfahren nach einem der vorhergehenden Ansprüche **dadurch gekennzeichnet, dass** die Modulationsperiode des besagten Durchflussquerschnitts des Fluids im Wesentlichen der Zeit entspricht, die notwendig ist, um die Temperatur des Fluids um zumindest ein Grad Celsius zu erhöhen.

6. Verfahren nach einem der vorhergehenden Ansprüche, **dadurch gekennzeichnet, dass** die Erkennung der Variationen der Temperatur des Fluids ebenfalls die Geschwindigkeit des Durchflusses des Fluids im besagten Abflussrohr (14) berücksichtigt.

7. Vorrichtung zur Messung des Durchsatzes von einem Fluid in einer Rohrleitung, die folgendes aufweist:
- ein Einlassrohr (12) und ein Abflussrohr (14) des Fluids und zwei Rohrleitungszweige (20, 22), die zwischen den besagten Rohren angeschlossen sind, wobei die besagten Rohre fähig sind, an die besagte Rohrleitung angeschlossen zu werden,
- Mittel, um eine Differenz zwischen der Temperatur des Fluids, das in dem einen der besagten Zweige (20, 22) fließt, und der Temperatur des Fluids, das in dem anderen Zweig fließt, zu erzeugen,
**dadurch gekennzeichnet, dass** sie folgendes aufweist:
- Mittel, um alternierend den Durchflussquerschnitt von jedem der besagten Zweige variieren zu lassen, wobei gleichzeitig der gesamte Durchflussquerschnitt des Fluids in den besagten Zweigen (20, 22) konstant gehalten wird, und
- Mittel zur Erkennung, in Abhängigkeit von der Zeit, der Variationen der Temperatur des Fluids im besagten Abflussrohr.

8. Vorrichtung nach Anspruch 7, **dadurch gekennzeichnet, dass** die besagten Mittel zum Erzeugen einer Differenz der Temperatur zumindest ein Heizelement aufweisen, das den einen der besagten beiden Zweige (20, 22) umgibt.

9. Vorrichtung nach Anspruch 7, **dadurch gekennzeichnet, dass** die besagten Mittel zum Erzeugen einer Differenz der Temperatur ein Peltier-Effekt-Element (28) aufweisen, wobei ein Teil (30) des besagten Elements die Temperatur des Fluids von dem einen (20) der besagten Zweige erhöht und ein anderer Teil (32) des besagten Elements die Temperatur des Fluids in dem anderen Zweig (22) senkt.

10. Vorrichtung nach Anspruch 9, **dadurch gekennzeichnet, dass** die Erhöhung der Temperatur im Wesentlichen derart, in entgegengesetzter Richtung, der Senkung der Temperatur entspricht, dass die Wärmebilanz neutral ist.

11. Vorrichtung nach einem der Ansprüche 7 bis 10, **dadurch gekennzeichnet, dass** jeder von den besagten zwei Zweigen der Rohrleitung (20, 22) einen flexiblen verformbaren Teil (24, 26) aufweist, dessen Durchflussquerschnitt durch Kompression moduliert werden kann.

12. Vorrichtung nach Anspruch 11, **dadurch gekennzeichnet, dass** die besagten Mittel zum alternierenden Variieren lassen des Durchflussquerschnitts von jedem der besagten Zweige ein schwingendes Element (34, 42-44) aufweisen, das gegenüber den besagten flexiblen Teilen der besagten Zweige angeordnet ist, und das fähig ist, während es sich verschiebt, abwechselnd die besagten flexiblen Teile (24, 26) zu komprimieren, wobei gleichzeitig der gesamte Durchflussquerschnitt des Fluids in den besagten Zweigen konstant gehalten wird.

13. Vorrichtung nach Anspruch 12, **dadurch gekennzeichnet, dass** die besagten Mittel des Weiteren einen Elektromagneten aufweisen, der das besagte schwingende Element verschiebt.

14. Vorrichtung nach Anspruch 12 oder 13, **dadurch gekennzeichnet, dass** das besagte schwingende Element ein Speiser (34) ist, der zwischen den besagten flexiblen Teilen (24, 26) angeordnet ist.

15. Vorrichtung nach Anspruch 12 oder 13, **dadurch gekennzeichnet, dass** das besagte schwingende Element einen Teil in Form einer Gabel mit zwei Zinken (42, 44) aufweist, die die besagten flexiblen Teile (24, 26) umgibt, wobei die Innenwand von jeder Zinke durch Kompression die Querschnittsmodulation des flexiblen Teils bewirkt.

16. Vorrichtung nach einem der Ansprüche 7 bis 15, **dadurch gekennzeichnet, dass** die besagten Mittel zur Erkennung die Variationen der Temperatur des Fluids einen Infrarotstrahlensensor (48) aufweisen.

17. Vorrichtung nach Anspruch 16, **dadurch gekennzeichnet, dass** der Sensor ein Bewegungssensor mit Infrarotstrahlung (48) ist.

18. Verfahren nach einem der Ansprüche 1 bis 6, **dadurch gekennzeichnet, dass** das besagte Fluid eine Flüssigkeit ist.
